# EUROPÄISCHE PATENTSCHRIFT

(11) **EP 3 736 030 B1**
(45) Veröffentlichungstag und Bekanntmachung des Hinweises auf die Patenterteilung: **18.08.2021**
(21) Anmeldenummer: 19172700.7
(22) Anmeldetag: 06.05.2019
(51) Int. Cl.: B01D 3/38, B01D 3/40, B01D 17/02, C11B 3/14, C11D 3/18

(54) **VERFAHREN UND ANLAGE ZUM ABTRENNEN VON TERPENEN AUS EINEM WÄSSRIGEN ALKOHOLGEMISCH**
SEPARATION OF TERPENES FROM ALCOHOL-WATER MIXTURES BY MEANS OF EXTRACTIVE DISTILLATION
SÉPARATION DES TERPÈNES DES MÉLANGES D'ALCOOL ET D'EAU PAR DISTILLATION EXTRACTIVE

(43) Veröffentlichungstag der Anmeldung: 11.11.2020
(73) Patentinhaber: GEA Wiegand GmbH, 76275 Ettlingen (DE)
(72) Erfinder: LEIBIG, Ralf, 76707 Hambrücken (DE); BECKER, Jörg, 76135 Karlsruhe (DE); MAEDEBACH, Eckard, 38116 Braunschweig (DE)
(74) Vertreter: Weickmann & Weickmann PartmbB

(56) Entgegenhaltungen:
- DE-C1- 10 021 951
- US-A- 2 282 982
- US-A- 2 610 141
- US-A- 4 664 786
- US-A1- 2011 048 922
- US-A1- 2015 051 423
- US-A1- 2016 251 281
- US-A1- 2017 151 509

## Beschreibung

Die vorliegende Erfindung betrifft ein Verfahren und eine Anlage zum Abtrennen von Terpenen aus einem wässrigen Alkoholgemisch. Terpene sind wertvolle Ausgangsstoffe der chemischen Industrie, die größtenteils pflanzlichen Ursprungs sind und somit üblicherweise zunächst einmal aus Stoffgemischen abgetrennt werden müssen, bevor sie weiter verarbeitet werden können. Ein praktisches Beispiel für das Gewinnen eines Terpens aus einem Naturstoffgemisch ist das thermische Abtrennen von D-Limonen bei der Herstellung von Orangensaft, wobei aus Auszügen der hierbei anfallenden Schalen im chemischen Sinne eine wässrige Lösung gebildet wird und das D-Limonen als Duftstoff, Lösungsmittel und Verdünnungsmittel ein breites Anwendungsfeld hat.

Es ist bisher üblich gewesen, das Abtrennen von Terpenen aus wässrigen Lösungen in Verdampfungsstufen durchzuführen, die nach dem Prinzip der Wasserdampfdestillation arbeiten und denen in der Regel eine Vorrichtung zur Phasenscheidung nachgeschaltet ist. Sowohl bei der Wasserdampfdestillation als auch in der Phasentrennung wird hierbei die schlechte Löslichkeit von Terpenen in Wasser ausgenutzt.

Jedoch versagt dieses Verfahren bei Anwendungen, in welchen Terpene aus Alkohol-Wasser-Gemischen abgetrennt werden sollen, da durch die Wirkung des Alkohols als Lösevermittler die Trennleistung des Wasserdampfs deutlich reduziert oder gar ganz aufgehoben wird. Ein Beispiel für eine solche Anwendung ist ein Alkohol-gestützter Gewinnungsprozess von Wertstoffen, beispielsweise Citrus-Pektin, aus terpenhaltigem Rohmaterial.

Hierbei kann es insbesondere bei einer nachfolgenden Rückführung des Alkohols zu einer unerwünschten Anreicherung von Terpenen im Alkoholkreislauf kommen.

Wenngleich wenigstens zwei Ansätze verfolgt worden sind, um das eben beschriebene Problem auszuräumen, so konnte doch weder durch eine Rektifikation von Alkohol/Wasser mit Anreicherung der Terpene in Seitenabzügen noch durch eine partielle Verdampfung des Gemischs eine zufriedenstellende Abtrennung der Terpene von dem Alkohol erzielt werden, da die Gemische je nach Zusammensetzung und physikalischen Eigenschaften der Terpenanteile ein stark unterschiedliches Verhalten in derartigen Anlagen zeigen.

Allgemein ist das Rektifikationsverfahren bekannt für andere Stoffgemische wie z.B. in US2610141A1.

Es ist somit die Aufgabe der vorliegenden Erfindung, ein verbessertes Verfahren zum Abtrennen von Terpenen aus einem wässrigen Alkoholgemisch sowie eine Anlage zum Durchführen eines derartigen Verfahrens bereitzustellen, welches sich durch hohe Effizienz und einen zuverlässigen Betrieb auch mit unterschiedlichen Stoffgemischen bei gleichzeitig hervorragender Wirtschaftlichkeit auszeichnet.

Zum Lösen dieser Aufgabe umfasst das erfindungsgemäße Verfahren die folgenden Schritte:
- Zuführen des terpenhaltigen wässrigen Alkoholgemisches in einen mittleren Bereich einer beheizbaren Destillationskolonne;
- Zuführen von Heißwasser in einen Kopfbereich der Destillationskolonne;
- Entnehmen der Kopfdämpfe aus der Destillationskolonne und Zuführen davon zu einem Kondensator, in welchem durch Kondensieren ein Kopfdampf-Kondensat erzeugt wird;
- Zuführen des Kopfdampf-Kondensats zu einem dem Kondensator nachgelagerten Phasenabscheider, in welchem eine terpenreiche Phase und eine terpenarme Phase aus dem Kopfdampf-Kondensat abgeschieden werden;
- Entnehmen der terpenreichen Phase als Endprodukt.

Das erfindungsgemäß vorgeschlagene Verfahren beruht somit auf dem Prinzip der extraktiven Destillation (Extraktivrektifikation). Hierbei wird die Flüchtigkeit eines breiten Spektrums von Terpenen durch gezielte Zugabe des Schleppmittels Wasser in einen vorbestimmten Bereich einer Destillationskolonne in einer Weise beeinflusst, die in Kombination mit einer der Kondensation der Kopfdämpfe der Destillationskolonne nachgeschalteten Phasenabscheidung eine effektive Abtrennung der Terpene ermöglicht. Indem nämlich in weiten Bereichen des Kolonnenprofils die Alkoholkonzentration durch die Zugabe des Heißwassers gering gehalten wird, wird durch die Verringerung der Wirkung des Alkohols als Lösevermittler eine erhöhte Flüchtigkeit der Terpene gegenüber dem derart modifizierten wässrigen Alkoholgemisch erreicht und die Terpene lassen sich mit dem Kopfdampf aus der Kolonne austreiben. Die somit ebenfalls reduzierte Alkoholkonzentration in den zu kondensierenden Kopfdämpfen reduziert gleichermäßen die Wirkung des Alkohols als Lösevermittler im Phasenabscheider und sorgt für eine bestmögliche Abtrennung der Terpene aus dem Gemisch.

Das für die extraktive Destillation eingesetzte Heißwasser kann vorzugsweise im Siedezustand eingebracht werden, und es kann auf Frischwasser oder eine Rückführung von abgetrenntem Wasser aus anderen Prozessschritten zurückgegriffen werden, die weiter unten noch beschrieben werden. Die Trennleistung des erfindungsgemäßen Verfahrens lässt sich durch die Menge an zugeführtem Heißwasser und die Wahl von Zulaufböden einstellen.

Ferner umfasst das Verfahren ein Rückführen der terpenarmen Phase in den Kopfbereich der Destillationskolonne, unterhalb des Heißwassers. Durch diese Maßnahme wird ein kontinuierlicher Betrieb der Destillationskolonne gemäß dem erfindungsgemäßen Verfahren ermöglicht, wobei durch das Rückführen der terpenarmen Phase unterhalb des Bereichs, in welchem das Heißwasser in die Destillationskolonne eingegeben wird, die Alkoholkonzentration der Kopfdämpfe der Destillationskolonne möglichst gering gehalten werden kann. Erfindungsgemäß kann das Beheizen der Destillationskolonne durch eine Direktheizung und/oder durch eine Eingabe von Dampf oder Brüden in einen unteren Bereich der Destillationskolonne erfolgen. Hierbei kann die Auswahl der Beheizungsmaßnahme in einer konkreten Ausgestaltung des erfindungsgemäßen Verfahrens und der dazu eingesetzten Anlage insbesondere gemäß wirtschaftlichen Aspekten erfolgen, so dass beispielsweise in Fällen, in denen in benachbarten Anlagen überschüssiger Dampf oder ähnliche geeignete Heizmedien anfallen, diese zum Beheizen der vorliegenden Destillationskolonne eingesetzt werden können.

Das in dem Sumpf der Kolonne anfallende Sumpfprodukt, das ein an Terpenen abgereichertes Alkohol-Wasser-Restgemisch darstellt, kann ferner abgeführt und einem Destillationsschritt zum Trennen von Alkohol und Wasser unterzogen werden, um diese Stoffe zu regenerieren. Hierbei kann ein wirtschaftlicher Betrieb der Anlage bei einem Durchführen des erfindungsgemäßen Verfahrens insbesondere dann erreicht werden, wenn eine energetische Kopplung oder Zusammenschaltung dieses Destillationsschritts mit dem Abtrennungsschritt in der Destillationskolonne erfolgt. Hierzu kann das in dem Destillationsschritt abgetrennte Wasser wenigstens einen Teil des der Destillationskolonne zuzuführenden Heißwassers bilden und/oder ein in dem Destillationsschritt entstehender Brüden kann zum direkten und/oder indirekten Beheizen der Destillationskolonne verwendet werden, wobei der Brüden insbesondere ferner einer mechanischen Brüdenverdichtung unterzogen werden kann. Selbstverständlich ist jedoch auch eine Direkteinleitung des Brüden in die Destillationskolonne ohne zwischenzeitliche Verdichtung oder der Einsatz einer oder mehrerer Wärmepumpen möglich.

Alternativ oder zusätzlich ist es erfindungsgemäß zur Verbesserung der Effizienz des Phasenabscheiders und zur Begünstigung der Phasentrennung ebenfalls möglich, das Kopfdampf-Kondensat vor seinem Eintreten in den Phasenabscheider einem weiteren Kühlschritt zu unterziehen und/oder eine Verdünnung davon mit Wasser vorzunehmen.

Die in dem erfindungsgemäßen Verfahren abzutrennenden Terpene können beispielsweise bei der Verarbeitung der Schalen von Zitrusfrüchten, also z.B. Orangen, Limetten und Zitronen, und deren Folgeprodukten mit Alkohol-Wasser-Gemischen oder bei der Verarbeitung von Holzgrundstoffen, z.B. aus Pinien und/oder Kiefern, und deren Folgeprodukten mit Alkohol-Wasser-Gemischen anfallen. Dementsprechend kann der Alkohol Ethanol und/oder Isopropanol umfassen.

Gemäß einem zweiten Aspekt betrifft die vorliegende Erfindung eine Anlage zum Durchführen des erfindungsgemäßen Verfahrens, umfassend eine beheizbare Destillationskolonne, eine Zufuhrleitung für Heißwasser in den Kopfbereich der Destillationskolonne, eine Entnahmeleitung für Kopfdämpfe aus dem Kopfbereich der Destillationskolonne, einen Kondensator, welcher dazu eingerichtet ist, die Kopfdämpfe von der Entnahmeleitung zu erhalten und zu kondensieren, und einen stromabwärts des Kondensators angeordneten Phasenabscheider, welcher dazu eingerichtet ist, aus den kondensierten Kopfdämpfen eine terpenreiche Phase und eine terpenarme Phase abzuscheiden.

Hierbei kann die erfindungsgemäße Anlage zur Beheizung der Destillationskolonne einen Heizkörper, beispielsweise in Form eines Fallstromverdampfers oder eines Naturumlaufverdampfers, oder eine Einrichtung zum Verwenden von Dampf oder Brüden aus anderen Anlagenteilen umfassen. Hierbei kann auch anfallende Abwärme verwendet werden, die ggf. über wenigstens eine Wärmepumpe auf ein nutzbares Niveau gebracht wird.

Die erfindungsgemäße Anlage umfasst ferner eine Rückführleitung, welche dazu angeordnet ist, die terpenarme Phase von dem Phasenabscheider zu dem Kopfbereich der Destillationskolonne rückzuführen, wobei die Rückführleitung unterhalb der Zufuhrleitung für Heißwasser in die Destillationskolonne mündet.

Um den weiter oben bereits angesprochenen Destillationsschritt zum Trennen von Alkohol und Wasser in dem Sumpfprodukt durchführen zu können, kann die erfindungsgemäße Anlage ferner eine weitere Destillationskolonne umfassen, welche dazu eingerichtet ist, das in dem Sumpf der Kolonne anfallende Sumpfprodukt zugeführt zu bekommen und dieses zum Trennen von Wasser und Alkohol zu destillieren. In diesem Zusammenhang kann die erfindungsgemäße Anlage ferner einen mechanischen Brüdenverdichter umfassen, welcher dazu eingerichtet ist, einen Brüden aus der weiteren Destillationskolonne zu verdichten.

Um eine energetisch und damit wirtschaftlich vorteilhafte thermische Kopplung der Destillationskolonne und der weiteren Destillationskolonne zu realisieren, kann die Destillationskolonne beispielsweise als Seitenkolonne der weiteren Destillationskolonne oder gemeinsam mit der weiteren Destillationskolonne als Trennwandkolonne ausgebildet sein. Hierbei sind als Trennstufen alle üblichen trennwirksamen Einbauten, wie beispielsweise Böden oder eine Packung, denkbar. Selbstverständlich ist die Destillationskolonne jedoch auch als eigenständige Kolonne in thermischer Kopplung mit der weiteren Destillationskolonne ausführbar.

Zum Kondensieren der Kopfdämpfe aus der Destillationskolonne können indirekte Oberflächenkondensatoren oder direkte Mischkondensatoren eingesetzt werden. Zum Abführen der in dem Kondensator anfallenden Kondensationswärme kann dieser wiederum einen Dampfumformer, ggf. mit vor- und/oder nachgeschaltetem Brüdenverdichter, und/oder eine Wärmepumpe umfassen und/oder durch konventionelle Kühlmedien kühlbar sein. Es versteht sich, dass die an dieser Stelle anfallende Wärme wieder in anderen Anlagenteilen eingesetzt werden kann, beispielsweise im Falle eines Einsatzes eines Wärmetauschers.

Zuletzt kann in der erfindungsgemäßen Anlage der Phasenabscheider durch einen Schwerkraftabscheider oder durch einen Zentrifugalabscheider gebildet sein, und er kann vorzugsweise eine vorgeschaltete Kühleinrichtung zum Kühlen des ihm zuzuführenden Kondensats und/oder eine Einrichtung zum Eingeben von Wasser zum Verdünnen des Kondensats umfassen.

Weitere Merkmale und Vorteile der vorliegenden Erfindung werden aus der nachfolgenden Beschreibung einer Ausführungsform einer erfindungsgemäßen Anlage und eines konkreten Beispiels aus dem Betrieb der Anlage gemäß einem erfindungsgemäßen Verfahren deutlich.

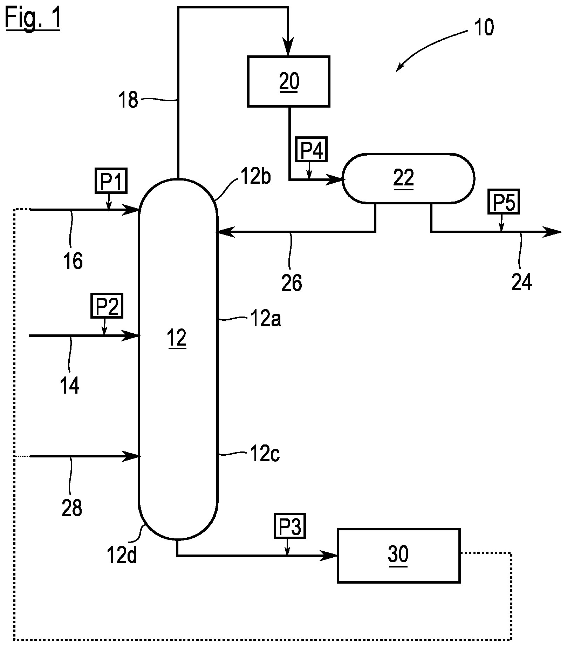

- Figur 1: zeigt hierbei eine schematische Ansicht der Ausführungsform einer erfindungsgemäßen Anlage.

In Figur 1 ist eine schematische Ansicht einer erfindungsgemäßen Anlage zum Abtrennen von Terpenen aus einem wässrigen Alkoholgemisch gezeigt, die ganz allgemein mit dem Bezugszeichen 10 bezeichnet ist. Im Zentrum der Anlage 10 steht eine Destillationskolonne 12, die nach dem Prinzip der extraktiven Destillation arbeitet.

Hierzu umfasst die Destillationskolonne 12 in ihrem mittleren Bereich 12a einen Zulauf 14, durch den das aufzutrennende Gemisch aus Wasser, Alkohol und Terpenen in die Kolonne 12 eingegeben wird. Oberhalb des Zulaufs 14, also in einem oberen Bereich oder Kopfbereich 12b der Kolonne 12, ist ferner eine Zufuhrleitung 16 für Heißwasser vorgesehen, mit dem eine lokale Verringerung der Alkoholkonzentration erreicht und somit die extraktive Destillation bewirkt wird.

Die bei der Destillation entstehenden Kopfdämpfe werden aus dem Kopfbereich 12b über eine Entnahmeleitung 18 entnommen und einem Kondensator 20 zugeführt, in welchem sie kondensiert werden. Die in dem Kondensator 20 kondensierten Kopfdämpfe werden anschließend an einen Phasenabscheider 22 weitergeleitet, wo eine terpenreiche Phase und eine terpenarme Phase abgeschieden werden. Die terpenreiche Phase kann nunmehr als Endprodukt an einer Entnahmeleitung 24 aus der Anlage 10 entnommen werden, während die terpenarme Phase über eine Rückführleitung 26 unterhalb der Zufuhrleitung 16 wieder in die Destillationskolonne 12 eingegeben wird.

Im unteren Teil 12c der Destillationskolonne 12 ist ferner eine Heizvorrichtung 28 vorgesehen, mittels derer die Destillationskolonne 12 beheizt wird. Hierzu kann beispielweise Frischdampf oder komprimierter Brüden verwendet werden, welcher wahlweise auch direkt in die Destillationskolonne 12 eingegeben werden kann.

Das im Sumpf 12d der Destillationskolonne anfallende und aus an Terpenen abgereichertem Wasser-Alkohol-Gemisch bestehende Sumpfprodukt kann zuletzt einer weiteren Destillationskolonne 30 zugeführt werden, wo es zur weiteren Verwendung in Alkohol und Wasser aufgetrennt wird. Hierbei kann optional, wie in Figur 1 durch die gestrichelte Linie angedeutet, das anfallende Wasser zurück zu der Zufuhrleitung 16 geführt und dort als Heißwasser wieder in die Destillationskolonne 12 eingegeben werden oder ebenso wie auch der in der weiteren Destillationskolonne 30 anfallende Brüden, ggf. nach einer mechanischen Verdichtung, in der Heizvorrichtung 28 zum Einsatz kommen. Somit wird eine thermische Kopplung zwischen der Destillationskolonne 12 und der weiteren Destillationskolonne 30 erzielt, was zu einem wirtschaftlichen Betrieb der Anlage 10 beiträgt.

Um den Betrieb und die Wirkweise der Anlage 10 zu verdeutlichen, sei im Folgenden ein Beispiel diskutiert, in welchem während der Verarbeitung von Orangenöl mit Isopropanol ein polares Terpen (Linalool) und ein unpolares Terpen (D-Limonen) abgetrennt werden sollen. Zur Beheizung der Anlage 10 wird hierbei ein Heizkörper mit einer Leistung von 2000 kW Heizleistung eingesetzt und die Anlage arbeitet unter Atmosphärendruck, wobei jedoch auch ein Betrieb mit Unter- oder Überdruck durchführbar wäre.

In der folgenden Tabelle sind zu diesem Zweck die jeweiligen Temperaturen, Drücke, Volumenströme und Massenanteile der Komponenten Isopropanol, Wasser, D-Limonen und Linalool an den Punkten P1-P5 aus Figur 1 angegeben:

| Punkt | P1 | P2 | P3 | P4 | P5 |
|---|---|---|---|---|---|
| Temperatur [°C] | 95 | 80 | 91,2 | 30 | 30 |
| Druck [mbar] | 3000 | 3000 | 1113 | 1013 | 1013 |
| | | | | | |
| Massenströme [kg/h] Isopropanol | 0 | 10000 | 9986 | 1121,22 | 13,88 |
| Wasser | 80000 | 9980 | 89977 | 3750,63 | 2,51 |
| D-Limonen | 0 | 10 | 0 | 27,84 | 10 |
| Linalool | 0 | 10 | 1,13 | 32,67 | 8,87 |
| | | | | | |
| Massenanteile [%] Isopropanol | 0 | 50 | 10 | 22,73 | 39,36 |
| Wasser | 100 | 49,9 | 90 | 76,04 | 7,11 |
| D-Limonen | 0 | 0,05 | 0 | 0,56 | 28,36 |
| Linalool | 0 | 0,05 | 0 | 0,66 | 25,16 |

Durch die in diesem Beispiel gewählte Verdünnung mit Wasser wird die relative Flüchtigkeit von Linalool gegenüber Isopropanol von etwa 0,3 auf 4,4 erhöht, während sich bei D-Limonen sogar eine Erhöhung von 4,2 auf 31,4 ergibt. Die erkennbar höhere Flüchtigkeit von D-Limonen im Vergleich zu Linalool ergibt sich durch Unterschiede in der Polarität der beiden Moleküle. Dies hat zur Folge, dass das D-Limonen zu 100% und das Linalool zu 90% abgeschieden werden kann, wobei letzteres ohne Verringerung des Alkoholgehalts auf Grund der bereits genannten Flüchtigkeit von nur 0,3 kaum vom Alkohol zu trennen wäre.

## Patentansprüche

1. Verfahren zum Abtrennen von Terpenen aus einem wässrigen Alkoholgemisch, umfassend die Schritte:
- Zuführen des terpenhaltigen wässrigen Alkoholgemisches in einen mittleren Bereich (12a) einer beheizbaren Destillationskolonne (12);
- Zuführen von Heißwasser in einen Kopfbereich (12b) der Destillationskolonne (12);
- Entnehmen der Kopfdämpfe aus der Destillationskolonne (12) und Zuführen davon zu einem Kondensator (20), in welchem durch Kondensieren ein Kopfdampf-Kondensat erzeugt wird;
- Zuführen des Kopfdampf-Kondensats zu einem dem Kondensator (20) nachgelagerten Phasenabscheider (22), in welchem eine terpenreiche Phase und eine terpenarme Phase aus dem Kopfdampf-Kondensat abgeschieden werden; und
- Entnehmen der terpenreichen Phase als Endprodukt,
**dadurch gekennzeichnet, dass** es ferner ein Rückführen der terpenarmen Phase in den Kopfbereich (12b) der Destillationskolonne (12), unterhalb des Heißwassers, umfasst.

2. Verfahren nach Anspruch 1, wobei das Beheizen der Destillationskolonne (12) durch eine Direktheizung und/oder eine Eingabe von Dampf oder Brüden in einen unteren Bereich (12c) der Destillationskolonne (12) erfolgt.

3. Verfahren nach einem der vorhergehenden Ansprüche, wobei ein in einem Sumpf (12d) der Destillationskolonne (12) anfallendes Sumpfprodukt abgeführt und einem Destillationsschritt zum Trennen von Wasser und Alkohol unterzogen wird.

4. Verfahren nach Anspruch 3, wobei das in dem Destillationsschritt abgetrennte Wasser wenigstens einen Teil des der Destillationskolonne (12) zuzuführenden Heißwassers bildet und/oder wobei ein in dem Destillationsschritt entstehender Brüden zum direkten und/oder indirekten Beheizen der Destillationskolonne (12) verwendet wird, wobei der Brüden insbesondere ferner einer mechanischen Brüdenverdichtung unterzogen werden kann.

5. Verfahren nach einem der vorhergehenden Ansprüche, wobei das Kopfdampf-Kondensat vor seinem Eintreten in den Phasenabscheider (22) einem weiteren Kühlschritt unterzogen wird und/oder mit Wasser verdünnt wird.

6. Verfahren nach einem der vorhergehenden Ansprüche, wobei der Alkohol Ethanol und/oder Isopropanol umfasst.

7. Anlage zum Durchführen eines Verfahrens nach einem der vorhergehenden Ansprüche, umfassend:
- eine beheizbare Destillationskolonne (12);
- eine Zufuhrleitung (16) für Heißwasser in den Kopfbereich (12b) der Destillationskolonne (12);
- eine Entnahmeleitung (18) für Kopfdämpfe aus dem Kopfbereich (12b) der Destillationskolonne (12);
- einen Kondensator (20), welcher dazu eingerichtet ist, die Kopfdämpfe von der Entnahmeleitung (18) zu erhalten und zu kondensieren; und
- einen stromabwärts des Kondensators (20) angeordneten Phasenabscheider (22), welcher dazu eingerichtet ist, aus den kondensierten Kopfdämpfen eine terpenreiche Phase und eine terpenarme Phase abzuscheiden, **dadurch gekennzeichnet, dass** sie ferner
eine Rückführleitung (26) umfasst, welche dazu angeordnet ist, die terpenarme Phase von dem Phasenabscheider (22) zu dem Kopfbereich (12b) der Destillationskolonne (12) rückzuführen, wobei die Rückführleitung (26) unterhalb der Zufuhrleitung (16) für Heißwasser in die Destillationskolonne (12) mündet.

8. Anlage nach Anspruch 7, ferner umfassend eine weitere Destillationskolonne (30), welche dazu eingerichtet ist, ein in einem Sumpf (12d) der Destillationskolonne (12) anfallendes Sumpfprodukt zugeführt zu bekommen und dieses zum Trennen von Wasser und Alkohol zu destillieren.

9. Anlage nach Anspruch 8, ferner umfassend einen mechanischen Brüdenverdichter, welcher dazu eingerichtet ist, einen Brüden aus der weiteren Destillationskolonne (30) zu verdichten.

10. Anlage nach einem der Ansprüche 8 und 9, wobei die Destillationskolonne (12) und die weitere Destillationskolonne (30) thermisch gekoppelt sind, beispielsweise indem die Destillationskolonne (12) als Seitenkolonne der weiteren Destillationskolonne (30) oder gemeinsam mit der weiteren Destillationskolonne (30) als Trennwandkolonne ausgebildet ist.

11. Anlage nach einem der Ansprüche 7 bis 10, wobei der Kondensator (20) durch einen Oberflächenkondensator oder einen Mischkondensator gebildet ist.

12. Anlage nach einem der Ansprüche 7 bis 11, wobei der Kondensator (20) zum Abführen der Kondensationswärme einen Dampfumformer, ggf. mit vor- und/oder nachgeschaltetem Brüdenverdichter, und/oder eine Wärmepumpe umfasst und/oder durch konventionelle Kühlmedien kühlbar ist.

13. Anlage nach einem der Ansprüche 7 bis 12, wobei der Phasenabscheider (22) durch einen Schwerkraftabscheider oder durch einen Zentrifugalabscheider gebildet ist, und vorzugsweise eine vorgeschaltete Kühleinrichtung zum Kühlen des ihm zuzuführenden Kondensats und/oder eine Einrichtung zum Eingeben von Wasser zum Verdünnen des Kondensats umfasst.

## Claims

1. Method for separating terpenes from an aqueous alcohol mixture, comprising the steps of:
- feeding the terpene-containing aqueous alcohol mixture into a central region (12a) of a heatable distillation column (12);
- feeding hot water into a top region (12b) of the distillation column (12);
- removing the top vapours from the distillation column (12) and feeding them to a condenser (20) in which a top vapour condensate is produced by condensation;
- feeding the top vapour condensate to a phase separator (22) downstream of the condenser (20), in which phase separator a terpene-rich phase and a terpene-poor phase are separated from the top vapour condensate; and
- removing the terpene-rich phase as the end product,
**characterised in that** the method further comprises returning the low-terpene phase to the top region (12b) of the distillation column (12), below the hot water.

2. Method according to claim 1, wherein the distillation column (12) is heated by direct heating and/or by introducing steam or vapours into a lower region (12c) of the distillation column (12).

3. Method according to either of the preceding claims, wherein a bottom product obtained in a bottom (12d) of the distillation column (12) is removed and subjected to a distillation step for separating water and alcohol.

4. Method according to claim 3, wherein the water separated off in the distillation step forms at least some of the hot water to be fed to the distillation column (12) and/or wherein a vapour produced in the distillation step is used for direct and/or indirect heating of the distillation column (12), wherein the vapours can, in particular, also be subjected to mechanical vapour compression.

5. Method according to any of the preceding claims, wherein the top vapour condensate is subjected to a further cooling step and/or is diluted with water before it enters the phase separator (22).

6. Method according to any of the preceding claims, wherein the alcohol comprises ethanol and/or isopropanol.

7. System for carrying out a method according to any of the preceding claims, comprising:
- a heatable distillation column (12);
- a feed line (16) for hot water into the top region (12b) of the distillation column (12);
- a removal line (18) for top vapours from the top region (12b) of the distillation column (12);
- a condenser (20) designed to receive and condense the top vapours from the removal line (18); and
- a phase separator (22) which is arranged downstream of the condenser (20) and is designed to separate a terpene-rich phase and a terpene-poor phase from the condensed top vapours, **characterised in that** said system further comprises
a return line (26) which is arranged so as to return the low-terpene phase from the phase separator (22) to the top region (12b) of the distillation column (12), the return line (26) opening into the distillation column (12) below the feed line (16) for hot water.

8. System according to claim 7, further comprising a further distillation column (30) which is designed to receive a bottom product obtained in a bottom (12d) of the distillation column (12) and to distil said bottom product in order to separate water and alcohol.

9. System according to claim 8, further comprising a mechanical vapour compressor which is designed to compress a vapour from the further distillation column (30).

10. System according to any of claims 8 and 9, wherein the distillation column (12) and the further distillation column (30) are thermally coupled, for example by the distillation column (12) being designed as a side column of the further distillation column (30) or together with the further distillation column (30) as a dividing wall column.

11. System according to any of claims 7 to 10, wherein the condenser (20) is formed by a surface condenser or a mixing condenser.

12. System according to any of claims 7 to 11, wherein the condenser (20), for dissipating the condensation heat, comprises a steam converter, optionally having an upstream and/or downstream vapour compressor, and/or a heat pump and/or can be cooled by conventional cooling media.

13. System according to any of claims 7 to 12, wherein the phase separator (22) is formed by a gravity separator or by a centrifugal separator and preferably comprises an upstream cooling device for cooling the condensate to be fed to said phase separator and/or a device for adding water to dilute the condensate.

## Revendications

1. Procédé de séparation de terpènes à partir d'un mélange d'alcools aqueux, comprenant les étapes consistant à :
- introduire le mélange d'alcools aqueux contenant des terpènes dans une section centrale (12a) d'une colonne de distillation chauffable (12) ;
- introduire de l'eau chaude dans une section de tête (12b) de la colonne de distillation (12) ;
- retirer les vapeurs de tête de la colonne de distillation (12) et les introduire dans un condenseur (20) dans lequel un condensat de vapeur de tête est produit par condensation ;
- introduire le condensat de vapeur de tête dans un séparateur de phases (22) en aval du condenseur (20), dans lequel une phase riche en terpène et une phase pauvre en terpène sont séparées du condensat de vapeur de tête ; et
- retirer la phase riche en terpènes comme produit final,
**caractérisé en ce qu'**il comprend en outre un retour de la phase pauvre en terpène vers la section de tête (12b) de la colonne de distillation (12), en dessous de l'eau chaude.

2. Procédé selon la revendication 1, dans lequel le chauffage de la colonne de distillation (12) est effectué par chauffage direct et/ou une introduction de la vapeur ou des vapeurs dans une section de fond (12c) de la colonne de distillation (12).

3. Procédé selon l'une des revendications précédentes, dans lequel un produit de fond produit dans un fond (12d) de la colonne de distillation (12) est déchargé et soumis à une étape de distillation pour séparer l'eau et l'alcool.

4. Procédé selon la revendication 3, dans lequel l'eau séparée dans l'étape de distillation forme au moins une partie de l'eau chaude à introduire dans la colonne de distillation (12) et/ou dans lequel une vapeur produite dans l'étape de distillation est utilisée pour le chauffage direct et/ou indirect de la colonne de distillation (12), la vapeur pouvant en outre être soumise à une recompression mécanique des vapeurs.

5. Procédé selon l'une des revendications précédentes, dans lequel le condensat de vapeur de tête est soumis à une étape de refroidissement supplémentaire et/ou dilué avec de l'eau avant d'entrer dans le séparateur de phases (22).

6. Procédé selon l'une des revendications précédentes, dans lequel l'alcool comprend de l'éthanol et/ou de l'isopropanol.

7. Installation pour la mise en œuvre d'un procédé selon l'une des revendications précédentes, comprenant :
- une colonne de distillation chauffable (12) ;
- une ligne d'alimentation (16) pour l'eau chaude dans la section de tête (12b) de la colonne de distillation (12) ;
- une ligne de retrait (18) pour les vapeurs de tête provenant de la section de tête (12b) de la colonne de distillation (12) ;
- un condenseur (20) adapté pour recevoir et condenser les vapeurs de tête provenant de la ligne de retrait (18) ; et
- un séparateur de phases (22) situé en aval du condenseur (20) et adapté pour séparer une phase riche en terpène et une phase pauvre en terpène des vapeurs de tête condensées, **caractérisé en ce qu'**il comprend en outre
une ligne de retour (26) agencée pour retourner la phase pauvre en terpène depuis le séparateur de phases (22) vers la section de tête (12b) de la colonne de distillation (12), dans laquelle la ligne de retour (26) débouche dans la colonne de distillation (12) en dessous de la ligne d'alimentation en eau chaude (16).

8. Installation selon la revendication 7, comprenant en outre une autre colonne de distillation (30) qui est agencée pour être alimentée en un produit de fond s'accumulant dans un fond (12d) de la colonne de distillation (12) et pour le distiller pour séparer l'eau et l'alcool.

9. Installation selon la revendication 8, comprenant en outre un recompresseur de vapeurs mécanique adapté pour comprimer une vapeur provenant de la colonne de distillation supplémentaire (30).

10. Installation selon l'une des revendications 8 et 9, dans laquelle la colonne de distillation (12) et la colonne de distillation supplémentaire (30) sont couplées thermiquement, par exemple en ce que la colonne de distillation (12) est une colonne latérale de la colonne de distillation supplémentaire (30) ou conjointement avec la colonne de distillation supplémentaire (30) est une colonne à paroi de séparation.

11. Installation selon l'une des revendications 7 à 10, dans laquelle le condenseur (20) est formé par un condenseur de surface ou un condenseur mixte.

12. Installation selon l'une des revendications 7 à 11, dans laquelle le condenseur (20) comprend un convertisseur de vapeur, éventuellement avec un compresseur de vapeur en amont et/ou en aval, et/ou une pompe à chaleur pour évacuer la chaleur de condensation et/ou peut être refroidi par des fluides de refroidissement classiques.

13. Installation selon l'une des revendications 7 à 12, dans laquelle le séparateur de phases (22) est formé par un séparateur gravitaire ou par un séparateur centrifuge, et comprend de préférence un dispositif de refroidissement en amont pour refroidir les condensats à y alimenter et/ou un dispositif d'introduction d'eau pour diluer les condensats.
